# EUROPEAN PATENT SPECIFICATION

(11) **EP 0 784 498 B1**
(45) Date of publication and mention of the grant of the patent: **29.12.1999**
(21) Application number: 95933492.1
(22) Date of filing: 05.10.1995
(51) Int. Cl.: B01D 45/12, B01D 45/02

(54) **REMOVAL OF PARTICULATE MATERIAL**
BESEITIGUNG VON PARTIKELFÖRMIGEM MATERIAL
EXTRACTION DE MATIERES PARTICULAIRES

(30) Priority: 06.10.1994 GB 9420210; 09.06.1995 GB 9511722
(43) Date of publication of application: 23.07.1997
(73) Proprietor: Arnold, Adrian Christopher, Tavistock, Devon PL19 0NG (GB); Arnold, Arthur John, Devon EX20 4BJ (GB)
(72) Inventor: ARNOLD, Arthur, John, Devon EX20 4BJ (GB)
(74) Representative: Harrison, Ivor Stanley
(86) International application number: GB9502365
(87) International publication number: WO9611047

(56) References cited:
- DE-A- 3 122 476
- DE-A- 3 536 315
- FR-A- 1 150 474
- FR-A- 2 346 039
- GB-A- 1 491 672
- US-A- 2 487 633
- US-A- 3 064 411
- US-A- 4 569 687

## Description

This invention relates to a device for removal of particulate material from a fluid stream.

The invention will be described with particular reference to its use in the exhaust system of a diesel internal combustion engine but it is not intended to be limited thereto; the invention finds equal utility in other applications where removal of particulate material from a gas or liquid stream is desirable, for example in a flue stack.

Devices are known which remove particulate material by direct entrapment from a gas stream, for example exhaust gas, in which devices the gas is passed through a filter or screen and particulates are deposited thereon. The deposited particulate may be treated by a chemical reaction or combustion or simply allowed to accumulate. When the particulate is left to accumulate, the known devices become clogged and impede the flow of gas before they are replaced. In any event, the known devices present an obstacle to the flow of gas, thus creating back pressure and reducing the efficiency of the gas flow. Filter devices are also well known for removal of particulates from liquid streams but, again, they tend to become clogged with the material removed.

It is therefore an object of the present invention to provide a device for removing particulate material from a fluid stream and in which the problem of back pressure is substantially eliminated.

FR-A-1150474 describes apparatus for removal of particulate material from a gas stream and comprising a housing with an inlet and an outlet for the gas stream, means for generating rotary motion in the gas stream, an expansion chamber and a collection chamber into which particulate matter falls by gravity, the gas stream having lost its kinetic energy.

According to the invention, apparatus for removal of particulate material from a fluid stream comprises a housing including an inlet and an outlet for the fluid stream, means for generating a rotary motion in the fluid within the housing, an expansion chamber disposed downstream of the rotary motion generating means, and a collection chamber, characterised in that the rotary motion is vortical, the expansion chamber has a larger cross-section than the inlet housing containing the rotary motion generating means and the collection chamber is disposed in a region at or towards the periphery of the expansion chamber whereby, in use with particulate-containing fluids flowing through the device, a secondary vortex is generated in said region between the expansion chamber and the collection chamber, the fluid being decelerated in the expansion chamber with precipitation of particulates towards the periphery thereof, the fluid stream with particulates removed therefrom passing from the housing through the outlet, and precipitated particulates being carried towards the collection chamber by the secondary vortex and collected in the collection chamber.

Optionally, the apparatus further includes one or more transfer chambers arranged between the expansion and collection chambers; preferably, the or each transfer chamber is peripherally interconnected with the adjacent chambers. A plurality of collection chambers may be provided, attached either direct to the expansion chamber or to the or the most downstream transfer chamber. The means for generating a rotary motion in the fluid may comprise an array of vanes or an inlet which is axially offset, for example a tangential inlet.

The collection and optional transfer chambers are disposed away from the direct fluid pathway between the inlet and outlet of the housing, at or towards the periphery of the expansion chamber and at one side thereof, conveniently arranged in use such that gravity assists in the collection and retention of particulates within the chamber.

The device according to the invention is preferably used in an exhaust or other system whereby the pressure of the existing flow of gas serves as the primary source of energy, although an auxiliary fan may optionally be disposed upstream of the device to supply secondary pressure.

Preferably, the expansion chamber is a cylindrical chamber of larger cross-section than the remainder of the exhaust system to promote the rapid deceleration of the gas in a simple manner; it has been found to be especially beneficial to efficient separation of particulates if the expansion chamber is axially offset or eccentrically disposed relative to the direct fluid pathway through the device, whereby the relative centrifugal field of the fluids and entrained particulates is optimised. The sides of the expansion chamber may be tapered, preferably inwardly towards the exhaust outlet end of the device, to increase the velocity of gases flowing therethrough.

The collection chamber or, if present, the transfer chamber is preferably eccentric to the expansion chamber and may be detachable therefrom without the need for substantially dismantling the exhaust system, or removal of the device itself, for cleaning purposes.

The collection chamber or chambers may be re-used after being emptied or may be disposable.

Where the means for generating a rotary motion in the fluid stream comprise vanes, the vanes are preferably inclined to the flow of fluid, the rotary motion being preferably swirling or toroidal in order to urge particulates entrained in the fluid stream towards the periphery of the expansion chamber before precipitation takes place. Preferably, the vanes may be arranged as a single, coplanar array or may be arranged as a plurality of arrays, the individual vanes of respective arrays being optionally offset from one another.

Optionally, the apparatus includes a reverse-flow cyclone outlet tube fitted to the or a collection chamber, especially where the fluid is a liquid.

Embodiments of the invention will now be described by way of example with reference to the accompanying drawings, of which
Figure 1 illustrates in longitudinal section a device as installed in the exhaust system of an internal combustion engine;
Figure 2 shows the device of Figure 1 with two transfer chambers; and
Figure 3 illustrates in longitudinal section another embodiment of a device as installed in an internal combustion engine.

With reference to Figure 1, the device 10 consists essentially of a housing having an inlet or upstream end 11 and an outlet or downstream end 12. The device in use is connected in-line in the exhaust system of the internal combustion engine; if the system includes a catalytic converter, the device would preferably be placed upstream of the catalyst, to prevent the catalyst from being poisoned by the particulates.

The inlet end of the housing contains an array of vanes 13, typically six in number, extending radially from a central hub 14, and an expansion chamber 15 is disposed downstream of the vanes. The expansion chamber has a larger diameter than the inlet/outlet ends of the housing and is eccentrically mounted with respect thereto. A removable collection chamber 16 is provided at the side of the expansion chamber.

The arrows represent the approximate gas flow pathway in use. Particulates-containing exhaust gases A enter the device at the inlet end 11 and are incident upon the vanes 13, which impart a swirling or vortical motion to the gases B. In the expansion chamber 15, the swirling motion causes the gas flow C to extend to the periphery of the chamber where a small secondary vortex is created which carries the particulates out of the primary vortex and into the collection vessel. The eccentric mounting ensures that the particulates are progressively further removed from the notional direct air pathway through the inlet and outlet ends of the device, and the relative centrifugal field is enhanced. As the gases lose velocity in the expansion chamber, the particulates are entrained in the secondary vortex which deposits them in the collection chamber 16, from where they may from time to time be removed. The exhaust air D with particulates removed therefrom passes from the device via the outlet end 12.

With reference to Figure 2, where the same reference numerals have been used to denote the same parts as those of Figure 1, the device 20 operates in substantially the same manner as the device 10. Transfer chambers 21 and 22 are provided between the expansion chamber 15 and the collection vessel 16.

In use, particulates containing exhaust gases A enter the device 20 at the inlet end 11 and are incident upon the vanes 13, which impart a swirling or vortical motion to the gases B. In the expansion chamber 15, the swirling motion causes the gas flow C to extend to the periphery of the chamber where a secondary vortex is created which carries the particulates out of the primary vortex. The gas flow C extends to the periphery of the transfer chamber 21 where a tertiary vortex is created carrying particulates out of the secondary vortex. The gas flow C further extends to the periphery of the transfer chamber 22 creating a quaternary vortex which carries the particulates into the collection vessel 16 from where they may, periodically, be removed. The exhaust air D with particulates removed therefrom passes from the device via the outlet end 12. The use of the transfer chambers significantly improves the collection of smaller particulate.

With reference to Figure 3, like reference numerals will again be used to describe like parts. The device 30 has a housing with an upstream end 11 having an inlet orifice 11a which is disposed at a right angle to the axis of the housing and is axially offset therefrom. The walls of the expansion chamber 15 are tapered inwardly towards the outlet or exhaust end 12 of the device.

In use, particulates containing exhaust gases A enter the device through the inlet 11a and are incident upon the wall 11b of the upstream end of the housing 10, which imparts a swirling or vortical motion to the gases B. In the expansion chamber 15, the swirling motion causes the gas flow C to extend to the periphery of the chamber where a small secondary vortex is created which carries the particulates out of the primary vortex and into the collection vessel 16. The exhaust air D with particulates removed therefrom passes from the device via the outlet end 12.

## Claims

1. Apparatus for removal of particulate material from a fluid stream (A), the apparatus comprising a housing including an inlet (11) and an outlet (12) for the fluid stream, means (13) for generating a rotary motion in the fluid within the housing, an expansion chamber (15) disposed downstream of the rotary motion generating means, and a collection chamber (16), characterised in that the rotary motion is vortical, the expansion chamber has a larger cross-section than the inlet housing containing the rotary motion generating means and the collection chamber is disposed in a region at or towards the periphery of the expansion chamber whereby, in use with particulate-containing fluids flowing through the device, a secondary vortex is generated in said region between the expansion chamber (15) and the collection chamber (16), the fluid being decelerated in the expansion chamber with precipitation of particulates towards the periphery thereof, the fluid stream with particulates removed therefrom (B) passing from the housing through the outlet (12), and precipitated particulates being carried towards the collection chamber (16) by the secondary vortex and collected in the collection chamber.

2. Apparatus according to Claim 1, further including one or more transfer chambers (21, 22) arranged between the expansion (15) and collection (16) chambers.

3. Apparatus according to Claim 2, in which the or each transfer chamber (21, 22) is peripherally interconnected with the adjacent chambers.

4. Apparatus according to any of Claims 1 to 3, including a plurality of collection chambers (16), attached either direct to the expansion chamber (15) or to the most downstream transfer chamber (22).

5. Apparatus according to any preceding claim, in which the means for generating a rotary motion in the fluid comprises an array of vanes (13).

6. Apparatus according to any of Claims 1 to 4, in which the means for generating a rotary motion in the fluid comprises an inlet (11a) which is axially offset from the axis of the housing.

7. Apparatus according to any preceding claim, further including an auxiliary fan disposed upstream of the device to supply secondary pressure.

8. Apparatus according to any preceding claim, in which the expansion chamber is axially offset or eccentrically disposed relative to the direct fluid pathway through the apparatus, whereby the relative centrifugal field of the fluids and entrained particulates is optimised.

9. Apparatus according to any preceding claim, in which the sides of the expansion chamber are tapered inwardly towards the exhaust outlet end of the apparatus.

10. Apparatus according to any preceding claim, in which the collection chamber (16) or, if present, the transfer chamber (21, 22) is eccentric to the expansion chamber (15) and is optionally detachable therefrom.

11. Apparatus according to any preceding claim, further including a reverse-flow cyclone outlet tube fitted to the or a collection chamber.

12. A method for the removal of particulate material from a fluid stream and collecting said material in a collection chamber, the method comprising generating a rotary motion in the fluid, decelerating the fluid in an expansion chamber and removing particulates therefrom, characterised in that the rotary motion is vortical and a secondary vortex is created in the region between the expansion chamber and the collection chamber, the secondary vortex carrying particulates from the primary vortex into the collection chamber.

## Patentansprüche

1. Vorrichtung zum Entfernen von partikelförmigem Material aus einem Fluidstrom (A), wobei die Vorrichtung ein Gehäuse mit einem Einlaß (11) und einem Auslaß (12) für den Fluidstrom, eine Einrichtung (13) zum Erzeugen einer Rotationsbewegung in dem Fluid in dem Gehäuse, eine Expansionskammer (15), die stromabwärts bezüglich der die Rotationsbewegung erzeugenden Einrichtung angeordnet ist, und eine Sammelkammer (16) aufweist, **dadurch gekennzeichnet**, daß die Rotationsbewegung wirbelartig ist, die Expansionskammer einen größeren Querschnitt hat als das Einlaßgehäuse, das die die Rotationsbewegung erzeugende Einrichtung enthält, und die Sammelkammer in einem Gebiet bei oder in Richtung des Umfangs der Expansionskammer angeordnet ist, wodurch bei Betrieb mit Partikel enthaltenden Fluiden, die durch die Vorrichtung strömen, in dem Gebiet zwischen der Expansionskammer (15) und der Sammelkammer (16) ein zweiter Wirbel erzeugt wird, das Fluid in der Expansionskammer verzögert wird, und zwar unter Ausscheidung von Partikeln in Richtung auf dessen Umfang, der Fluidstrom, aus dem die Partikeln (B) ausgeschiedenen sind, durch den Auslaß (12) aus dem Gehäuse austritt und ausgeschiedene Partikel durch den zweiten Wirbel in Richtung auf die Sammelkammer (16) getragen und in der Sammelkammer gesammelt werden.

2. Vorrichtung nach Anspruch 1, außerdem mit einer oder mehreren Übergangskammern (21, 22), die zwischen der Expansions-(15) und der Sammelkammer (16) angeordnet sind.

3. Vorrichtung nach Anspruch 2, bei der die oder jede Übergangskammer (21, 22) peripherisch mit den benachbarten Kammern verbunden ist.

4. Vorrichtung nach einem der Ansprüche 1 bis 3, mit einer Vielzahl von Sammelkammern (16), die entweder direkt an der Expansionskammer (15) oder an der am weitesten stromabwärts gelegenen Übergangakammer (22) angebracht sind.

5. Vorrichtung nach einem der vorhergehenden Ansprüche, bei der die Einrichtung zum Erzeugen einer Rotationsbewegung in dem Fluid eine Anordnung aus Leitschaufeln (13) enthält.

6. Vorrichtung nach einem der Ansprüche 1 bis 4, bei der die Einrichtung zum Erzeugen einer Rotationsbewegung in dem Fluid einen Einlaß (11a) enthält, der bezüglich der Achse des Gehäuses in axialer Richtung versetzt ist.

7. Vorrichtung nach einem der vorhergehenden Ansprüche, außerdem mit einem zusätzlichen Gebläse, das stromaufwärts bezüglich der Einrichtung angeordnet ist, um einen zweiten Druck zuzuführen.

8. Vorrichtung nach einem der vorhergehenden Ansprüche, bei der die Expansionskammer relativ zu dem direkten Strömungsweg durch die Vorrichtung axial versetzt oder exzentrisch angeordnet ist, wodurch das relative Zentrifugalfeld des Fluids und der mitgerissenen Partikel optimiert wird.

9. Vorrichtung nach einem der vorhergehenden Ansprüche, bei der die Seiten der Expansionskammer in Richtung auf das Ausstoßauslaßende der Vorrichtung nach innen geneigt sind.

10. Vorrichtung nach einem der vorhergehenden Ansprüche, bei der die Sammelkammer (16) oder, sofern vorhanden, die Übergangskammer (21, 22) bezüglich der Expansionskammer (15) exzentrisch und wahlweise davon abnehmbar ist.

11. Vorrichtung nach einem der vorhergehenden Ansprüche, außerdem mit einem Gegenstrom-Zyklon-Auslaßrohr, das an der oder einer Sammelkammer angeschlossen ist.

12. Verfahren zum Entfernen von partikelförmigem Material aus einem Fluidstrom und zum Sammeln dieses Materials in einer Sammelkammer, wobei das Verfahren das Erzeugen einer Rotationsbewegung in dem Fluid, das Verzögern des Fluids in einer Expansionakammer und das Entfernen von Partikeln daraus umfaßt, **dadurch gekennzeichnet**, daß die Rotationsbewegung wirbelartig ist und in dem Gebiet zwischen der Expansionskammer und der Sammelkammer ein zweiter Wirbel erzeugt wird, wobei der zweite Wirbel die Partikel aus dem Hauptwirbel in die Sammelkammer trägt.

## Revendications

1. Appareil pour l'extraction d'une matière en particules d'un courant de fluide (A), l'appareil comprenant un corps qui comporte une entrée (11) et une sortie (12) pour le courant de fluide, des moyens (13) pour engendrer un mouvement de rotation dans le fluide à l'intérieur du corps, une chambre de détente (15) disposée en aval des moyens de génération de mouvement rotatif, et une chambre de collecte (16), caractérisé en ce que le mouvement de rotation est de type vortex, la chambre de détente a une section transversale plus grande que le corps d'entrée contenant les moyens de génération de mouvement de rotation, et la chambre de collecte est disposée dans une région à la périphérie ou vers la périphérie de la chambre de détente de sorte que, en utilisation avec des fluides contenant des particules qui s'écoulent à travers le dispositif, un vortex secondaire est engendré dans ladite région entre la chambre de détente (15) et la chambre de collecte (16), le fluide étant ralenti dans la chambre de détente avec précipitation de particules vers sa périphérie, le courant de fluide dont les particules ont été séparées (B) passant du corps à la sortie (12), et les particules précipitées étant entraînées vers la chambre de collecte (16) par le vortex secondaire et collectées dans la chambre de collecte.

2. Appareil selon la revendication 1, comprenant en outre une ou plusieurs chambres de transfert (21, 22) agencées entre la chambre de détente (15) et la chambre de collecte (16).

3. Appareil selon la revendication 2, dans lequel la ou chaque chambre de transfert (21,22) est périphériquement interconnectée avec les chambres adjacentes.

4. Appareil selon une quelconque des revendications 1 à 3, incluant une pluralité de chambres de collecte (16), attachées directement à la chambre de détente (15) ou à la chambre de transfert la plus en aval (22).

5. Appareil selon une quelconque des revendications précédentes, dans lequel les moyens de génération d'un mouvement de rotation dans le fluide comprennent un ensemble d'ailettes (13).

6. Appareil selon une quelconque des revendications 1 à 4, dans lequel les moyens de génération d'un mouvement de rotation dans le fluide comprennent une entrée (11a) qui est axialement décalée de l'axe du corps.

7. Appareil selon une quelconque des revendications précédentes, comprenant en outre un ventilateur auxiliaire disposé en amont du dispositif pour fournir une pression secondaire.

8. Appareil selon une quelconque des revendications précédentes, dans lequel la chambre de détente est axialement décalée ou disposée de façon excentrée par rapport au chemin direct du fluide à travers l'appareil, de sorte que le champ centrifuge relatif des fluides et des particules entraînées est optimisé.

9. Appareil selon une quelconque des revendications précédentes, dans lequel les côtés de la chambre de détente sont inclinés vers l'intérieur vers l'extrémité de sortie d'évacuation de l'appareil.

10. Appareil selon une quelconque des revendications précédentes, dans lequel la chambre de collecte (16) ou, si elle existe, la chambre de transfert (21,22) est excentrée par rapport à la chambre de détente (15) et peut être optionnellement détachée de celle-ci.

11. Appareil selon une quelconque des revendications précédentes, comprenant en outre un tube de sortie de cyclone à flux inverse adapté à la chambre de collecte ou à une chambre de collecte.

12. Procédé pour l'extraction d'une matière en particules à partir d'un courant de fluide et la collecte de ladite matière dans une chambre de collecte, le procédé comprenant la génération d'un mouvement de rotation dans le fluide, la décélération du fluide dans une chambre de détente et l'extraction des particules du fluide, caractérisé en ce que le mouvement de rotation est de type vortex et un vortex secondaire est créé dans la région entre la chambre de détente et la chambre de collecte , le vortex secondaire transportant les particules du vortex principal à la chambre de collecte.
